Europäisches Patentamt

European Patent Office

Office européen des brevets

(11) Publication number: **0 355 437**
**A1**

## EUROPEAN PATENT APPLICATION

(21) Application number: **89113649.1**

(22) Date of filing: **25.07.89**

(51) Int. Cl.⁴ **B29C 49/50 , B29C 49/04**

(30) Priority: **15.08.88 US 232034**

(43) Date of publication of application:
**28.02.90 Bulletin 90/09**

(84) Designated Contracting States:
**DE FR GB IT NL**

(71) Applicant: **GENERAL ELECTRIC COMPANY**
**1 River Road**
**Schenectady New York 12305(US)**

(72) Inventor: **Teutsch, Erich Otto**
**RR Nr. 3, Summit Road**
**Pittsfield Massachusetts 01201(US)**

(74) Representative: **Catherine, Alain**
**General Electric France Service de Propriété**
**Industrielle 18 Rue Horace Vernet**
**F-92136 Issy-Les-Moulineaux Cedex(FR)**

(54) **Improved pinch-off for extrusion blow molded articles.**

(57) A method and apparatus is described for pinching closed and separating waste material from a molded article in the production of hollow articles of thermoplastic material by the blowing process. At least four pinch edges (30, 34, 36, 38) are provided to close upon the parison extending beyond the mold cavity (18), and by a symmetrical pressure of the plurality of edges, effects an improved pinch-off with consequent advantages in the articles blown.

FIG. 1

EP 0 355 437 A1

## IMPROVED PINCH-OFF FOR EXTRUSION BLOW MOLDED ARTICLES

### BACKGROUND OF THE INVENTION

#### Field of the Invention

This invention relates to a method of and apparatus for pinching closed a tubular parison and then separating waste material from the parison, in the production of hollow articles of thermoplastics material by a blow molding process.

#### Brief Description of the Prior Art

The prior art literature is replete with descriptions of blow molding apparatus and processes, wherein tubular parisons of thermoplastic resins are inserted into a mold and excess material pinched off by pinch edges associated with the mold. Representative of only a very few of the prior art descriptions are those found in the U.S. Patents 2,908,034; 3,354,246; 3,487,501; 3,793,422; 4,070,140; and 4,332,750. In general, the commercially employed apparatus comprises a split mold having two halves. Each half of the mold bears a single pinch-off surface or edge. The two pinch-off edges are fixed and positioned to oppose each other when the mold halves are brought together, with the thermoplastic, hollow parison intervening. Pressure of the mold closing forces the parison walls together from two opposing directions, welds the walls together along an axial "weld line", and severs the portion remaining outside the mold cavity near the weld line site. The pinched off portion of the parison within the mold cavity is then ready for the blowing step of the blow molding process.

The articles produced by the above-described prior art procedure and apparatus have not been satisfactory in all respects and for all purposes. For example, when the molded article is to be used as a fluid container, there may be a weak zone in the vicinity of the pinch-off site. Weaknesses result from wall thickness variations in the container in the vicinity of the site of the pinch-off. This occurs when the wall is stretched by the pinch-off forces generated and imposed in the area of the pinch-off. In fact, the variation in wall thickness of prior art containers produced by prior art pinch-offs is not limited to zones immediately adjacent to the pinch-off, but occurs in sites more remote to the pinch-off site (extending toward the container end opposite the pinch-off site).

Also, the zones adjacent to the pinch-off site may be considerably thinner than other sites on the prior art product containers.

The non-uniformity of thickness in a given zone causes problems for extrusion blow molded containers during use, especially in hot-fill and retort applications. On hot-filling a blow-molded container, a partial vacuum develops as the contents cool, deforming the container. In severe cases, the thinnest portion of the wall collapses, but even mild deformation causes rocking, since the thinner parts tend to buckle outward as the thicker sections are drawn in.

The apparatus and the method of the present invention greatly reduce the thickness variations found at selected zones in the pinched-off and blown articles. The apparatus and the method of the present invention also reduce the size of the site having potential weakness due to thickness variations. Consequently, and as one would expect, the container articles molded by the method and the apparatus of the invention rarely rock upon hot-filling and adverse distortions are obviated. The pinch-off site is reduced in respect to affected area (area diameter). The pinch-off site is symmetrical and aesthetically acceptable to the user/consumer.

The apparatus and the method of the invention are advantageous for use in blow molding both mono- and multi-layered extrusion blow molded articles. In molding multi-layered containers, the apparatus and the method of the invention are especially advantageous, resulting in a greater uniformity of the properties for which one selects a laminate, i.e., to obtain the maximum benefits of each layer of the laminate.

In addition to more uniform wall thickness, the articles produced according to the invention exhibit minimal resin weight (due to optimal resin material usage) and a better weld of the parison walls at the pinch-off site (simplifying or eliminating the need for secondary sealing operations). Embodiment apparatus of the invention may be made compact enough to be used in conventional blow molding "wheel" molds and may include detabbing and retraction features for stacking capability.

Summary of the Invention

The invention comprises a multi-section blow mold for shaping a hollow article of a polymeric resin by the blowing process, which comprises:

(A) at least two mold sections at least one of which is

(i) movable from a mold open position, towards the other mold sections to partially close the mold and thereby cooperate together to form a mold cavity; and

(ii) movable from the mold partially closed position, away from the other mold sections to the mold open position, thereby providing complete access to the mold cavity;

(B) a portal in one end of the mold, formed by the mold sections when in the partially closed position and providing open communication between the mold cavity and the exterior of the mold, said portal being adapted by size and configuration to receive a protruding extension of a tubular parison of a polymeric resin inserted into the mold cavity; and

(C) at least four separate parison pinch-off surfaces positioned at the one end of the mold, said three surfaces cooperating with each other to close the portal when the mold sections are in the partially closed position, and to pinch-off the parison extension, each of the surfaces being spaced about the periphery of the portal when the portal is open.

The invention also comprises the method of closing the parison to be blown and pinching-off the excess of the parison extending out of the mold.

The invention also comprises the blown articles prepared from the pinched-off parisons.


Brief Description of the Drawings

Figure 1 is a fragmented, cross-sectional, side elevation of an embodiment blow mold of the invention.

Figure 2 is a top view of the embodiment mold shown in Figure 1, with the mold closed.

Figure 3 is a view as in Figure 2, but with the mold in a full open position.

Figure 4 is a view as in Figures 2 and 3 but with the mold closing upon a tubular parison.

Figure 5 is a view as in Figures 2-4, but with the mold almost fully closed and the parison pinch closed.

Figure 6 is a bottom view of a container blow molded in the embodiment blow mold of the invention shown in Figures 1-5.

Figure 7 is a graph showing the container wall thickness at 8 points around the bottom of 5 randomly chosen containers blow molded using a prior art two pincer pinch-off apparatus. The 8 selected points are diagrammed in the legend and the weld line obtained has a length of 1.835 inches (4.66 cm).

Figure 8 is a graph as in Figure 7 but showing the wall thickness of containers blow molded using a 4 pincer pinch-off apparatus of the invention. The longest weld line obtained as shown in the legend was 1.155 inches (2.11 cm).

Figure 9 is a graph showing the average bottom thickness determined at 8 sites on the periphery of a container bottom molded with a prior art 2 pincer pinch-off apparatus (as in Figure 7), in comparison to containers molded on a 4 pincer pinch-off apparatus of the invention (as in Figure 8).

Figure 10 is a graph showing the average thickness at four heights of a container molded with a prior art 2 pincer pinch-off apparatus, compared to containers molded with a 4 pincer pinch-off apparatus of the invention.

Figure 11 is a view from above of another embodiment mold assembly of the invention, having a combination of fixed and movable pinch-off surfaces.

Figure 12 is a bottom view of a container molded with the embodiment apparatus of Figure 11.

Figure 13 is a top view of still another embodiment mold assembly of the invention, having a plurality of pinch-off surfaces fixed in position.

Figure 14 is a bottom view of a container blow molded using the embodiment apparatus of Figure 13.


DETAILED DESCRIPTION OF THE PREFERRED EMBODIMENTS OF THE INVENTION

In the prior art pinch-off devices commercially used for extrusion blow mold apparatus, two fixed-in-position pinch-off edge surfaces associated with the parts of a split mold are generally used. Pinch-off is effected when the edges contact the parison from two opposing directions and close upon the parison to pinch it closed and then off. The improvement in the present invention comprises the use of at least four pinch-off edge surfaces or facets which may be movable independently from movement of the mold parts from an open to a closed position and vice versa, although the edges may also be fixed in position relative to the mold parts. The greater number of pinch-off edge surfaces make a greater number (than two) of initial contacts with the parison and continue the contacts for an improved pinch closing and pinch-off.

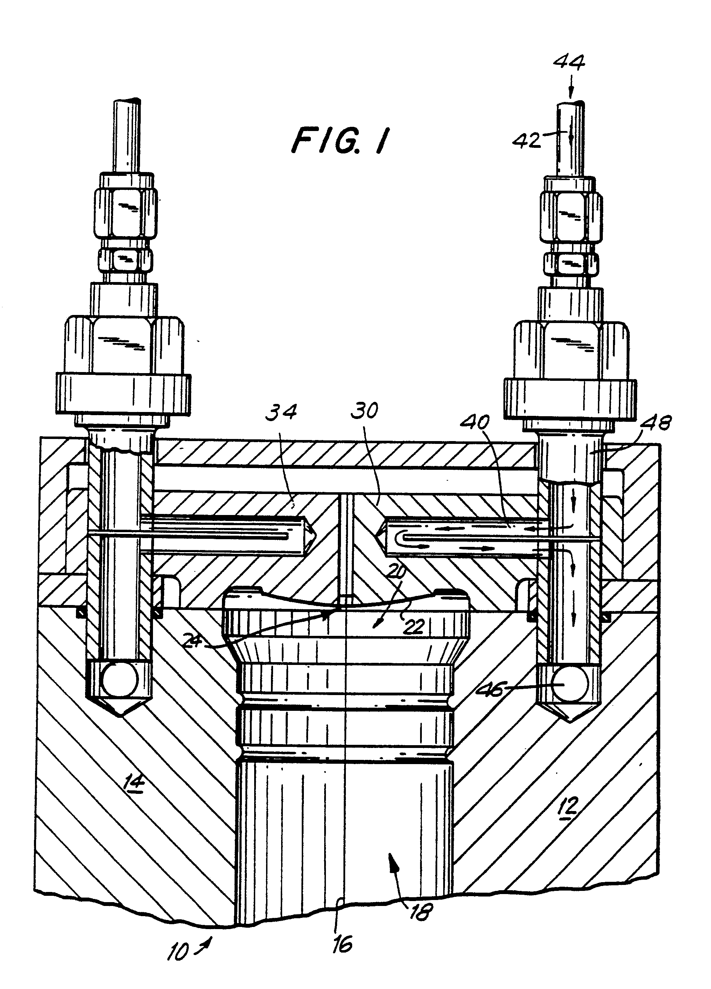

Referring first to Figure 1, a fragmentary, cross-sectional side view of an embodiment apparatus of the invention, there will be seen a mold assembly 10 of the invention. The mold assembly 10 comprises a split mold made up of mold half sections 12 and 14. At least one of the the two mold sections 12, 14 is movable towards and away from the other. Preferably both sections 12, 14 are movable. When moved together they join along line 16 to define and enclose at least partially a mold cavity 18 which is adapted by size and configuration to shape a tubular parison of a polymeric resin into a hollow article by the well-known extrusion blow molding process. The mold cavity 18 which is otherwise closed, when sections 12, 14 are brought together, generally has an opening 20 in the end 22 through which an extension of a tubular parison of an extruded polymeric resin protrudes after insertion between the mold sections 12, 14 and closing of the mold. The mold sections 12, 14 may be manufactured from any conventional mold material, preferably aluminum or machined steel. Pinch-off of and severing the tubular parison extension occurs at site 24 when the mold sections 12, 14 are in the mold closed position, due to a further closing action accomplished in part by four identical movable pincer members 30, 34, 36 and 38. In the Figure 1, the cross-sectional elevation is taken midway through the assembly 10 and therefore pincers 36, 38 are not shown. Each of the pincers 30, 34, 36 and 38 are manufactured from conventional materials, preferably machined steel, berylium-copper alloy, steel edged berylium-copper or aluminum alloys and the like. As shown in the Figure 1, the pincers 30, 34, 36 and 38 are inletted to receive in a closed conduit 40 circulation of a cooling fluid such as water to maintain a desired temperature of the portions of the pincers 30, 34, 36 and 38 which will contact the thermoplastic parison. In practice, it may be desirable to maintain the pincers 30, 34, 36 and 38, at a temperature below the temperature of the thermoplastic parison to be pinched-off. Cooling water circulates from a cooling water source (not shown in Figure 1) through conduit 42, entering from inlet 44 and exiting from water outlet 46. A portion of the conduit 42 also functions as a pivot 48, as will be explained in further detail hereinafter.

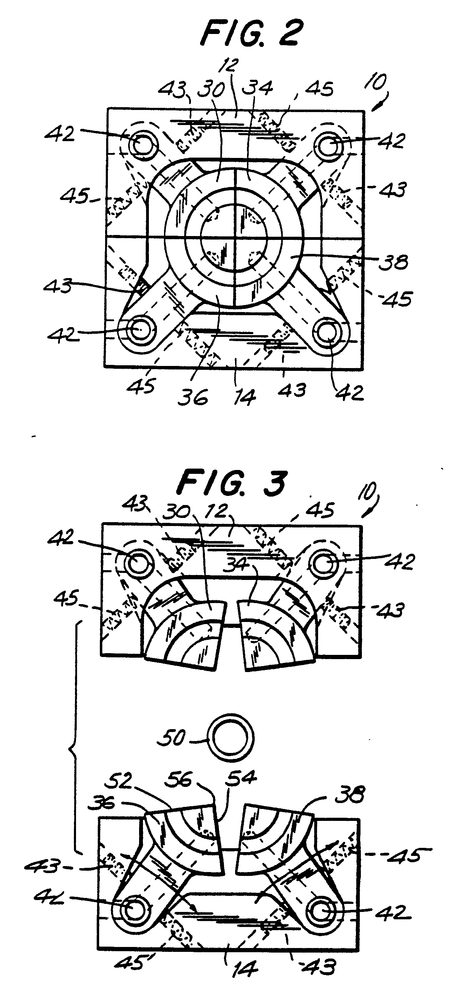

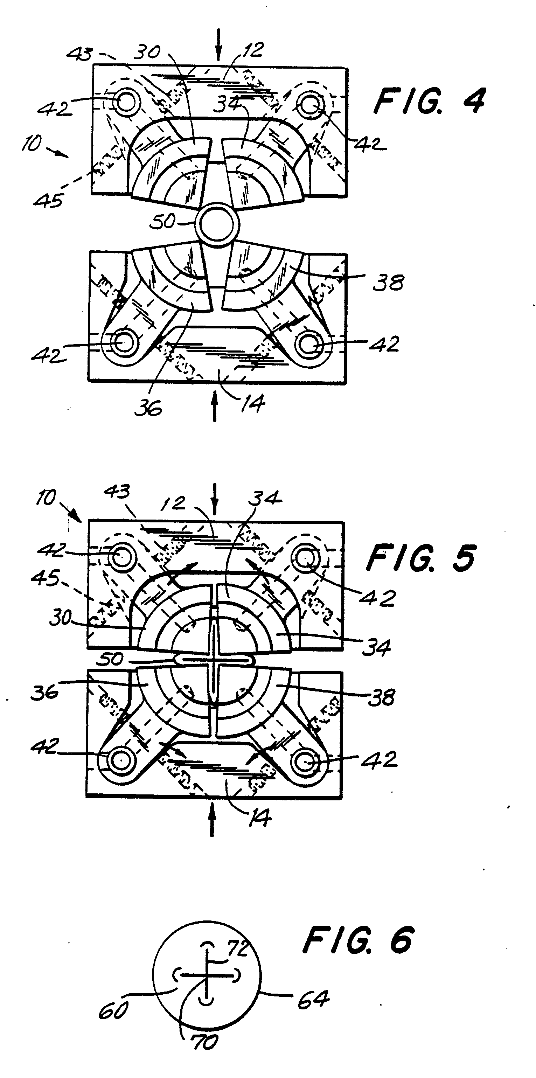

Referring now to Figure 2, there is seen a top view of the mold assembly 10 of the invention. As shown in Figure 2, there are four separate pincers 30, 4, 36 and 38. The mold assembly 10 of the invention as shown in Figure 2 is in a closed position with the portal or opening 20 hidden from view by the cooperating pincers 30, 34, 36 and 38 in a fully closed pinchoff position. The pincers 30, 34, 36 and 38 together are immobile in the position shown in Figure 2. Each pincer 30, 34, 36 and 38 is movable over a restricted arc upon the pivot point established by the conduit 42 (previously referred to) when the mold assembly 10 is open as shown in Figure 3. Each pincer 30, 34, 36 and 38 is thus mounted on a separate conduit 42 so as to pivot thereon about a restricted arc when the pincers 30, 34, 36 and 38 are not in the mold assembly 10 closed position shown in Figure 2.

Referring now to Figure 3, a view as in Figure 2 but with the mold assembly 10 in an open position, one can see that the pincers 30, 34, 36 and 38 have moved apart. In this position, each pincer 30, 34, 36 and 38 is movable over a restricted arc (see arrows on pincers 36, 38). Each pincer can be adjusted to further restrict the arc over which it may move, by use of the adjustable set screws 43 working against springs 45, pivoting the pincers 30, 34, 36 and 38 on the pivot point of each conduit 42. When the mold assembly 10 is in the fully open position as shown in Figure 3, a preform or parison 50 of a thermoplastic polymeric resin is inserted between the mold halves 12, 14 as shown in Figure 3. As stated previously, the parison 50 generally extends from the interior of mold cavity 18 past the pincers 30, 34, 36 and 38 via the portal or opening 20. Each pincer 30, 34, 36 and 38 has a pinch-off edge surface 52 and a pinch-off edge surface 54 at right angles to each other. The assembly 10 provides a total of eight pinch-off edge surfaces (two separate surfaces for each pincer). The pinch-off edge surfaces such as surfaces 52, 54 function as blades to, in sequence, pinch the tubular parison 50 closed and then sever the extended portion of the parison 50 which remains outside of the mold cavity 18 when the mold sections 12, 14 are brought together. As blades, the surfaces 52, 54 advantageously present an angle of about 5 to 75°, preferably about 12 to 20° to the line drawn perpendicular to the long axis of the parison 50 at the time when initial contact with the parison is made (as shown schematically in Figure 4). This acute angle tends to press the pinched-off parison into the closing mold so that a small bead of the thermoplastic material will form at the weld line site and upon formation of the weld line, a weak spot is avoided. Since the position of a given pincer 30, 34, 36, 38 is adjustable through the agency of set screws 43, any such angle can be selected. The point 56 juncture between pinch-off edge surfaces 52, 54 makes initial contact with the parison 50 during the pinch-off procedure. Since the pincers are movable over a restricted arc when the mold 10 is closing, they are self-aligning with respect to each other and also with respect to the parison 50 during closure. This feature will also serve to align a "hooked" parison in respect to the closing mold.

Referring now to Figure 4, a view as in Figures 2 and 3 but with the mold assembly 10 beginning to close, contact of the pincer points 56 with the parison 50 may be seen. The arrows in Figure 4 show the direction of closure between the mold sections 12 and 14 which bring about this initial contact between the pincers 30, 34, 36 and 38 and the parison 50 extending beyond the mold cavity 18. The initial position of each pincer 30, 34, 36 and 38 at this time of mold closure may be such that each contact point 56 is not spaced 90 degrees from the point 56 of an adjacent pincer 30, 34, 36 and 38 due to the mobility of the pincers. However, the self-alignment feature described above will result in movement of each pincer, as necessary, to achieve the 90 degree spacing. It will be appreciated that if more than four pincers are employed in an embodiment apparatus of the invention, the pincers will be eventually spaced appropriately to ensure initial contact with the parison at equal spacings, i.e., for example if six pincers are employed (total of 12 edges), the spacing will be such to establish a 60 degree parison contact angle. This self-alignment of the pincers helps center the parison 50 for pinch-off, even if the parison extending from the mold cavity 18 is hooked or on a curvilinear axial line due to thickness variations, thermal stresses, flow rate variations and like occurrences during extrusion of the parison. The pincers can be adjusted position wise by use of the set screws 43, to optimize correction of a hooked parison.

It will also be appreciated from Figure 4 that the forces exerted upon the parison 50 by the pincers 30, 34, 36, 38 at initial contact consists of 4 forces, in which two forces oppose two forces from opposite directions to hold the parison 50 in a relatively stable position.

Those skilled in the art will also appreciate the versatility of the preferred assembly 10 of the invention having adjustable pincers 30, 34, 36 and 38 when it is realized that one can adjust any two adjacent pincers so as to lock them together. In this way, any two adjacent pincers 30, 34, 36 and 38 (on the same side of a mold half) can be united so that they present a single, immobilized or fixed pinch-off edge surface for contact with the parison 50. In this way, the apparatus of the invention presents at least four pinch-off edge surfaces spaced about the periphery of the parison 50, but not necessarily evenly spaced.

Figure 5, is a view as in Figures 2-4, inclusive, but with the mold assembly almost closed, i.e., just prior to a severing of the parison. As seen in the Figure 5, the closing action of mold assembly 10 operates the four pincers 30, 34, 36 and 38 to close upon and pressure each of the pinch-off surfaces 52, 54 upon the parison 50 and against each other as shown in the Figure 5. There are now eight forces against the parison 50 in operation, one-half of which are in directional opposition with the other half to balance the forces. This closes the parison just before severance of "pinch-off" while stabilizing the parison. Pinch-off is symmetrical and leaves' an aesthetically pleasing pattern at the site of pinch-off on the hollow article blown in the mold cavity 18 after severance is complete and the mold cavity 18 is completely closed (Figure 2). With the mold assembly 10 fully closed, the preform or parison is ready to blow by conventional techniques. The fully closed mold as viewed from the top is seen in Figure 2 as previously described.

The apparatus and method of the invention is advantageously employed to blow mold square, rectangular, round or near round (oval) containers. Highly ovalized containers are also readily produced employing the mold assembly of the invention.

Although the preferred embodiment assembly 10 of the invention is relatively simple in design and function, it will be appreciated that many variations can be made without departing from the spirit and the scope of the invention. For example, any number of pincers or pinch-off edges may be employed provided they are symmetrically placed about the periphery of the opening 20 so that the force pressures exerted upon a parison 50 to pinch-off are substantially equal and balanced from all directions. Also, instead of a pivoting action of the pincers 30, 34, 36 and 38 or any additional pincers, to align them in respect to each other for closure and pinch-off of the parison, mechanical means may be employed to move the pincers into position and to exert the necessary equalized pressures upon a parison to effect the desired pinch-off. For example, the pincers may be moved by a mechanical cam action or by hydraulic pistons before or after mold closing to emplace them in a desired position to effect the desired pinch-off. When positioned prior to mold closing, the pincers 30, 34, 36 and 38 may in effect be fixed and immobile or left movable. So to, mechanical means may be employed for retraction of the pincers upon opening of the mold assembly 10 to remove a blown article. Timing means may also be employed to time contacts of the pincers with the parison.

As described above, the product articles blow molded in the assembly of the invention have certain advantages not associated with products produced in the prior art devices and methods for pinch-off. First, it has been observed that there is a highly regular and uniform surface on the inner aspect of the hollow article at the site of pinch-off. This is aesthetically acceptable to the consumer or user of the product, particularly when it is a container open to visual inspection by the consumer.

Figure 6 is a view of the bottom of a container 60 produced by the assembly 10 described above. The

EP 0 355 437 A1

characteristic design left by the pinch-off may be seen in the Figure 6. In comparison to the prior art containers molded following pinch-off with two pinch-off edge surfaces, one will visually observe three very noticeable differences. First, the total length of the weld lines is increased (sum of the length of the two observable weld lines 70, 72 shown in Figure 6) in comparison to the single weld line obtained in the prior art pinch-off. Second, the diameter of the affected area of the pinch-off is reduced and third, the pinch-off site. as marked by the weld lines, is moved towards the center of the container bottom. A centering and reduction of the area affected by the pinch-off are distinct advantages. It should be appreciated that as the number of pincers increase (for example from 4 to 6) the affected area of the pinch-off on the container 60 bottom will decrease even further. In comparison for example to a standard two pincer edge pinch-off, having an affected area of 9.63 cm diameter, a pinch-off using four pincers (8 edges) would result in a pinch-off affected area of 4.99 cm in diameter. A pinch-off with a six pincer apparatus (12 edges) would result in a pinch-off affected area of 3.43 cm in diameter (estimates based on identical parison dimensions plus an estimate for stretching and wall thickness components). Aside from the visually observable differences, the two edge pincer pinch-off often provides a failure point due to abrupt thickness changes near the bumper 64 of the container 60 (see Figure 6). In contrast, a four pincer or six pincer pinch-off gives better distribution of plastic material and avoids the abrupt thickness change at the bumper 64 of container 60 (permitting some reduction in overall weight of the container 60).

The following examples describe the manner and process of making and using the invention and set forth the best mode contemplated by the inventor for carrying out the invention.

A container was blow molded in a conventional and standard mold assembly of the prior art employing two pinch-off surfaces. The resin employed was a multi-layer laminate including a base layer of a polycarbonate resin. The blow molding of the container was repeated in a second molding except that a four pincer assembly as described above (assembly 10) was employed.

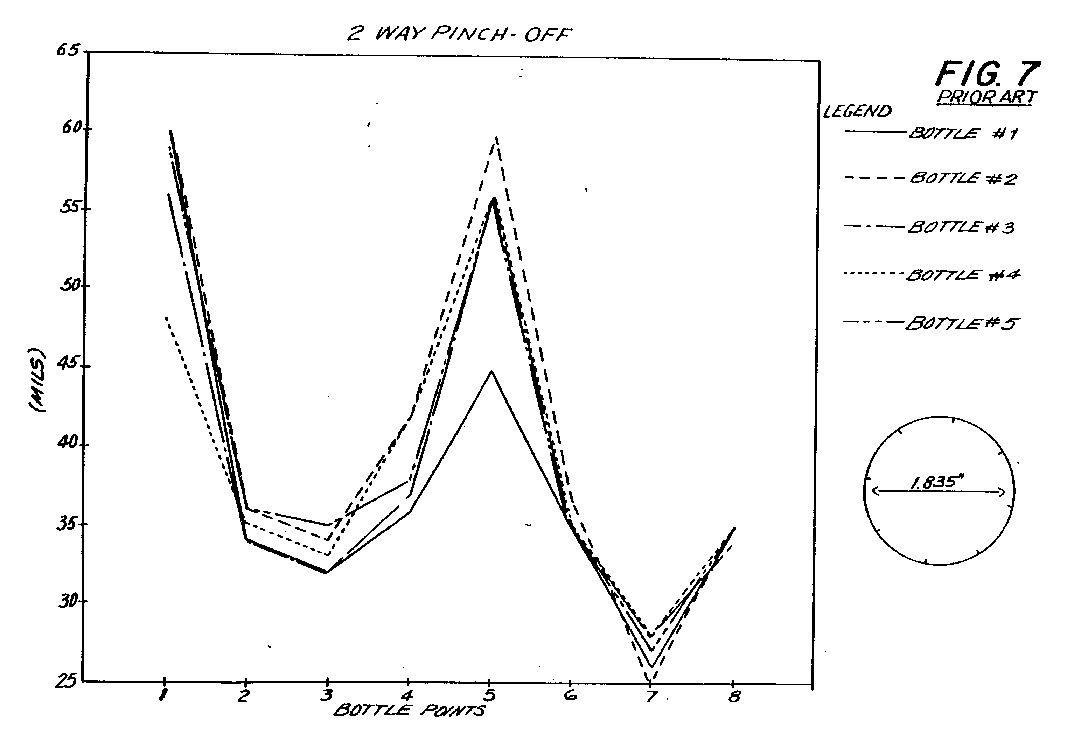

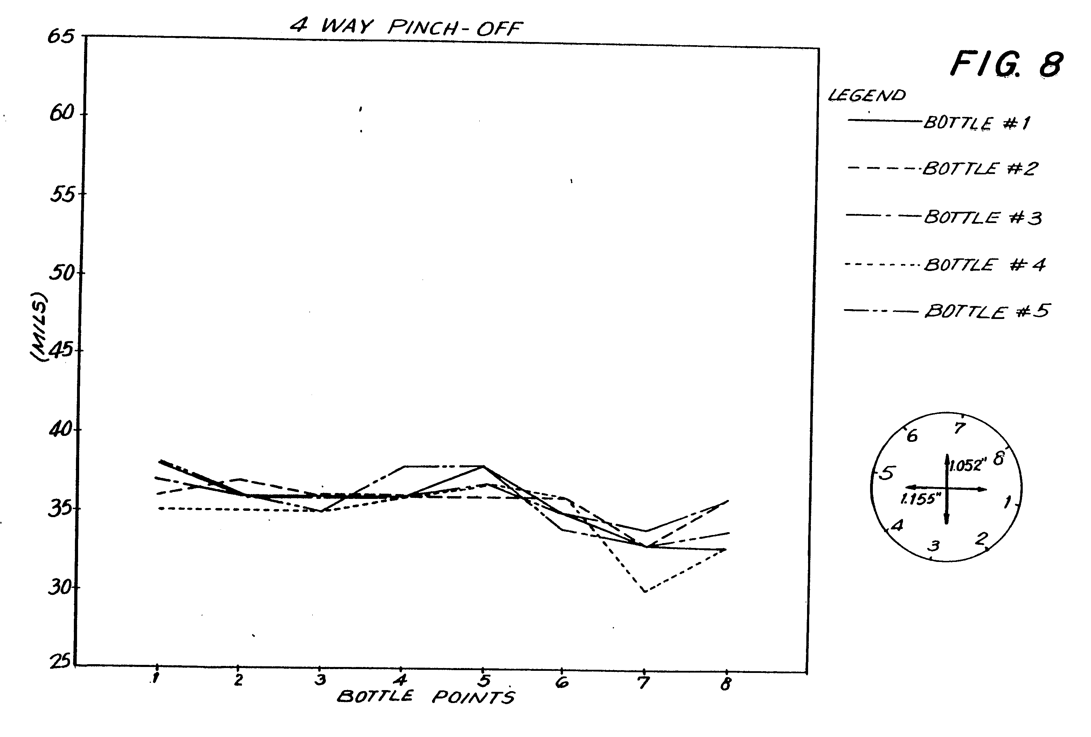

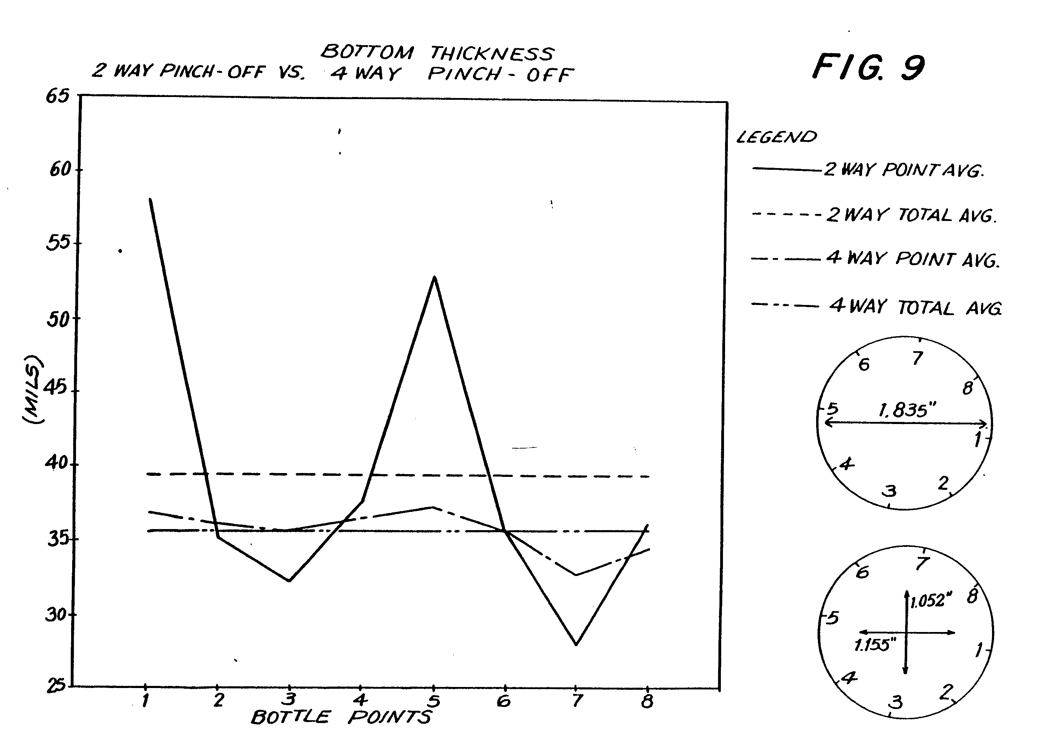

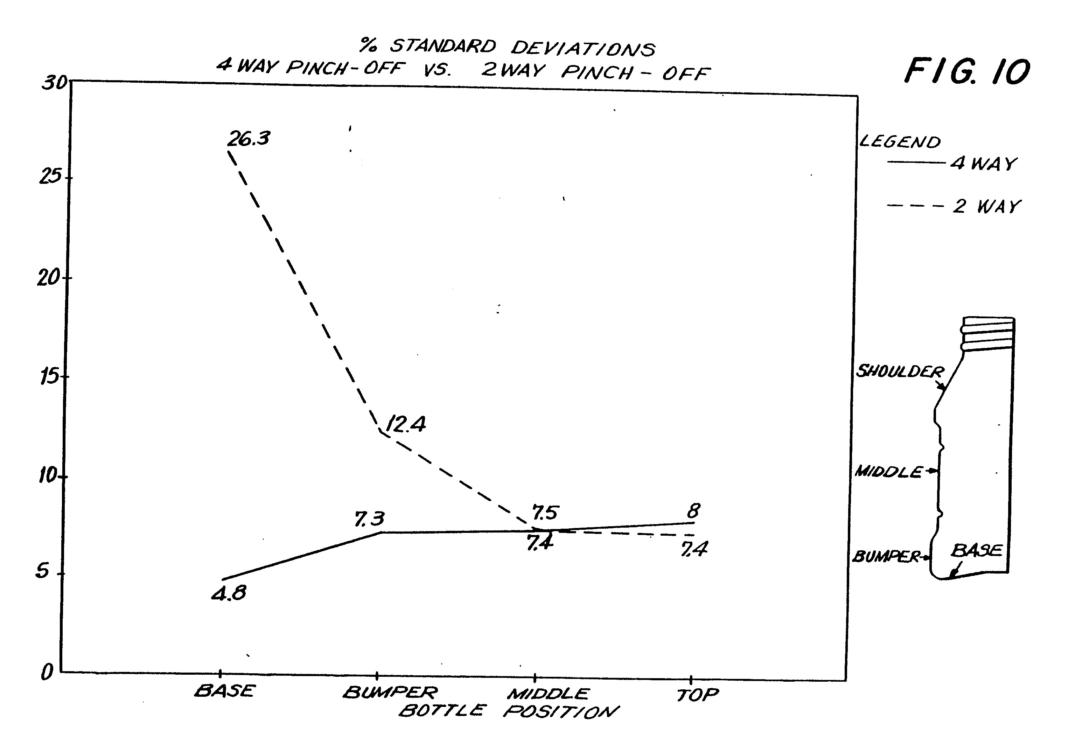

The Figure 7 graphically depicts the material thickness at eight points around the periphery of the bottom of five randomly chosen containers blow molded according to the standard two-edge pinch-off apparatus (see the container bottom view in the Figure Legend for position of the eight numbered points). The same points were plotted for five randomly chosen containers employing the four pincer pinch-off assembly 10 of the invention; see Figure 8. The improvement in wall thickness uniformity for the four point pinch-off is observed. Not only is the thickness variation much greater for the standard two pincer pinch-off, but the minimum thickness is considerably lower than for the four pincer pinch-off even though the overall average is greater for the controls; see Figure 9. The effect decreases toward the top of the container. The standard deviation around the average thickness at four heights on a container (Figure 10) represents thickness variation around the average value for each height. The graph of Figure 10 clearly shows that the four pincer (eight surfaces) pinch-off provides uniform thickness at the site of the bumper while a conventional two edge pinch-off does not produce uniform wall thickness until about the middle of the container. This non-uniformity causes problems for extrusion blow molded containers, especially in hot-fill and retort applications. On hot filling a blow molded container, a partial vacuum develops as the contents cool, deforming the container. In severe cases, the thinnest portion of the wall collapses but even mild deformation causes rocking, since the thinner parts tend to buckle outward as the thicker sections are drawn in. A ten fold reduction in distortion for the four pincer blown container is evident in the below table. The below Table describes the container weight, head space percentage, base diameter variation and number of pincers employed in the pinch-off for several randomly selected containers blown as described above and hot- filled with water maintained at a temperature of 96 degrees centigrade.

6

TABLE

| DISTORTION OF BASE ON HOT-FILLING | | | | | |
|---|---|---|---|---|---|
| CONTAINER WEIGHT (g) | HEAD SPACE (%) | BASE DIAM. MAJOR (mm) | BASE DIAM. MINOR (mm) | Δ D (mm) | NO. OF PINCER EDGES USED |
| 23.8 | 10 | 56.69 | 56.69 | 0.00 | 8 |
| 24.7 | 10 | 56.97 | 56.49 | 0.48 | 2 |
| 24.2 | 10 | 56.72 | 56.69 | 0.03 | 8 |
| 25.1 | 10 | 57.07 | 56.46 | 0.61 | 2 |
| 24.6 | 6 | 56.90 | 56.52 | 0.39 | 2 |
| 24.8 | 6 | 56.74 | 56.72 | 0.02 | 8 |
| 28.8 | 6 | 56.74 | 56.72 | 0.02 | 8 |
| 24.6 | 6 | 57.00 | 56.52 | 0.49 | 2 |
| 24.5 | 0 | 56.74 | 56.64 | 0.10 | 8 |
| - | 0 | 56.69 | 56.46 | 0.23 | 2 |
| 23.9 | 0 | 56.64 | 56.74 | 0.10 | 8 |
| 24.8 | 0 | 57.00 | 56.49 | 0.51 | 2 |

The average change in the base diameter occurring with containers manufactured using the two pincer apparatus of the prior art equalled 0.45 mm. In contrast, the four pincer apparatus produced containers exhibiting a diameter change of only 0.05 mm.

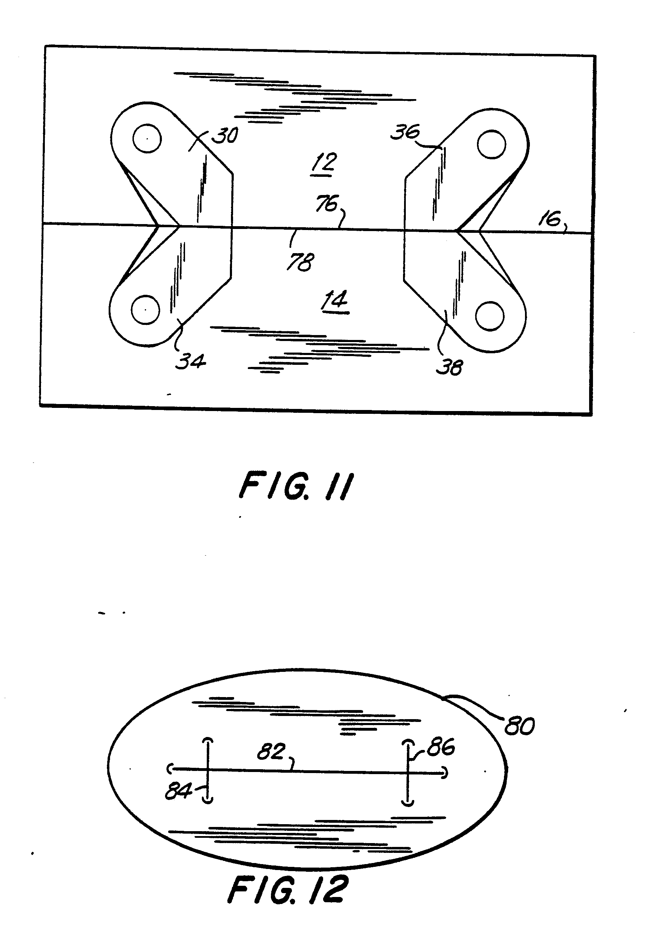

It should also be appreciated that a combination of movable and immovable pinch-off edge surfaces may be used in the apparatus and the method of the invention. For example, Figure 11 is a top view of an alternate assembly 10 of the invention wherein the four movable pincers 30, 34, 36 and 38 are mounted so that pincers 30, 36 are on one side of the mold line 16 and 34, 38 are on the other. The pincers 30, 36 and 34, 38 are separated respectively by intervening fixed pinch-off edges 76, 78, which are integral parts of the respective mold sections 12, 14, i.e., the pinch-off edges 76, 78 by themselves are conventional pinch-off edges as found in prior art apparatus, which function in cooperation with the added movable pincers 30, 34, 36 and 38 to obtain an improved pinch-off according to the method of the present invention.

Figure 12 is the bottom view of a rectangular container 80 blow molded from a parison pinched-off employing the apparatus of Figure 11. The weld line 82 is trisected by the weld lines 84, 86 and the affected area or zone of the pinch-off is reduced in size, compared to a pinch-off by apparatus lacking the additional pincers 30, 34, 36, 38.

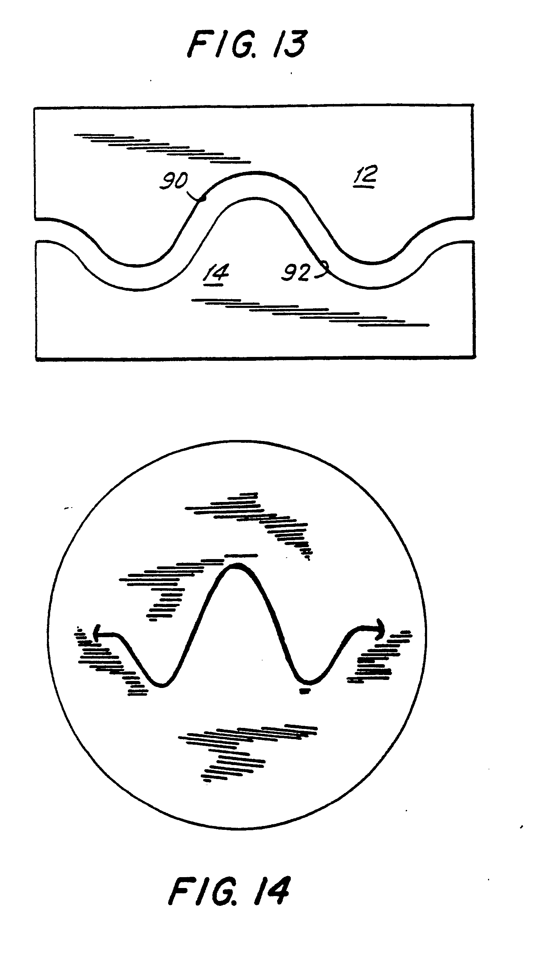

The term "at least four separate parison pinch-off surfaces" as used herein, has been illustrated by the preferred embodiment apparatus illustrated in the Figures 1-5 and 11. However, it will be appreciated by the artisan that separation of the pinch-off surfaces need not be by acute blade angles (such as the separation of surfaces 52 and 54 by point 56; see Figure 3) or by physical separation (such as edge 76 from pincer 36; see Figure 11). For example, separation can also be effected by any change of the overall blade edge direction, as illustrated in Figure 13. In other words, a single blade may be multi-faceted or have more than one continuous cutting edge.

Figure 13 is a view from above of another embodiment mold assembly of the invention wherein continuous pinch-off surfaces 90, 92 are individually multi-faceted or "corrugated" or "serrated" to result in "at least four" pinch-off surfaces as defined herein. The edges 90, 92 are an integral, fixed part of the mold sections 12, 14 (respectively). Each facet of the continuous pinch-off surface acts as a separate pinch-off edge surface. Pressures exerted upon a parison placed between the pinch-off edge surfaces 90, 92 to pinch the parison closed and to ultimately sever the parison at the pinch-off site are equal and opposite so as to hold the parison in the center of the pinch-off apparatus. The weld line 102 resulting from pinch-off and closure of the parison on a circular container bottom of a container 100 blown from the pinched-off parison is shown in Figure 14. Again, as shown in the Figure 14, the site of the pinch-off is reduced in area, compared to that which would occur using a prior art, 2 pinch-off edge surface apparatus.

There is no upper limit on the number of parison pinch-off surfaces or edges used in the apparatus of the invention. However, the improvement in articles blow molded from parisons pinched closed and off with the apparatus of the invention, measured by the reduction in pinch-off area diameter affected is not on a straight-line proportionality with the number of surfaces. As the number of pinch-off edge surfaces increases, the percentage of diameter reduction declines. As a practical matter only, six to twelve surfaces are optimal for most purposes.

## Claims

1. A multi-section blow mold assembly for shaping a hollow article of a polymeric resin by the blowing process, which comprises;

(A) at least two mold sections at least one of which which is

(i) movable from a mold open position, towards the other mold sections to partially close the mold and thereby cooperate together to form a mold cavity; and

(ii) movable from the mold partially closed position, away from the other mold sections to the mold open position, thereby providing access to the mold cavity;

(B) a portal in one end of the mold, formed by the mold sections when in the partially closed position and providing open communication between the mold cavity and the exterior of the mold, said portal being adapted by size and configuration to receive a protruding extension of a tubular parison of a polymeric resin inserted into the mold cavity; and

(C) at least four separate parison pinch-off surfaces positioned at the one end of the mold, said at least four surfaces cooperating with each other to close the portal when the mold sections are in the partially closed position, and to pinch-off the parison extension, each of the surfaces being spaced about the periphery of the portal when the portal is open.

2. The assembly of claim 1 wherein there are two mold sections.

3. The assembly of claim 1 wherein the two mold sections are movable.

4. The assembly of claim 1 wherein there are six surfaces.

5. The assembly of claim 1 wherein there are eight surfaces.

6. The assembly of claim 1 wherein there are twelve surfaces.

7. The assembly of claim 1 wherein at least two of the pinch-off surfaces are mounted, each on a separate and movable pincer member, each pincer member being positioned to move from a first position where the two pinch-off surfaces are spaced apart, to a second position where the two pinch-off surfaces are brought together.

8. The assembly of claim 1 wherein the pinch-off surfaces are associated with cooling means.

9. A method of closing an open end of a hollow thermoplastic parison prior to blowing the parison in a blow mold, which comprises;

simultaneously contacting the parison outer periphery with at least four pinch surfaces, said surfaces being spaced from each other about said periphery; and

pinching the parison walls together between the pinch surfaces by a simultaneous movement of the surfaces towards each other.

10. The method of claim 9 which further comprises severing the pinched parison at the site of pinching.

11. The method of claim 10 wherein pinching fully closes the open end of the parison.

12. Apparatus for closing and pinching-off a portion of a hollow, thermoplastic parison, which comprises;

means for supporting a plurality of pinch-off surfaces;

at least four separate pinch-off surfaces mounted on said means for support and spaced from each other, each of said surfaces having a parison initial contact point spaced from the initial contact points on the immediately adjacent pinch-off surfaces; and

means of moving the initial contact points together.

13. The apparatus of claim 12 wherein the means for supporting comprises a blow mold exterior surface.

14. The apparatus of claim 12 wherein the surfaces are on pivotable mounts.

15. The apparatus of claim 12 wherein the means for moving comprises a spring tensioned against a set screw.

16. A hollow container prepared by blowing a pre-formed, hollow thermoplastic polymeric resin parison, which comprises;

a tubular, shaped body of thermoplastic resin, said body having a first closed end and a second end;

said first closed end having a plurality of intersecting weld lines.

17. The container of claim 12 wherein there are two intersecting weld lines.

18. The container of claim 16 which is round in shape.

19. The container of claim 16 wherein the resin is a polycarbonate.

20. The container of claim 16 wherein the parison is a multi-laminate of thermoplastic resins.

21. A method of reducing the surface area of a blown, thermoplastic resin article which is affected by

8

the pinch-off of a tubular, thermoplastic resin parison, which comprises;
pinching the parison closed by
(A) contacting the parison with at least four pinch-off edge surfaces spaced apart from each other about the periphery of the parison; and
(B) pressing the surfaces against the parison with equal, opposing force to pinch-closed the parison.
22. The method of claim 1 wherein there are eight pinch-off edge surfaces.

FIG. 1

FIG. 2

FIG. 3

*FIG. 4*

*FIG. 5*

*FIG. 6*

2 WAY PINCH-OFF

FIG. 7
PRIOR ART

LEGEND
——————— BOTTLE #1
- - - - - BOTTLE #2
—·—·— BOTTLE #3
·········· BOTTLE #4
— - — BOTTLE #5

EP 0 355 437 A1

1.835"

FIG. 8

**BOTTOM THICKNESS**
**2 WAY PINCH-OFF VS. 4 WAY PINCH-OFF**

**FIG. 9**

LEGEND

——— 2 WAY POINT AVG.

- - - - 2 WAY TOTAL AVG.

—·—·— 4 WAY POINT AVG.

—··—··— 4 WAY TOTAL AVG.

(MILS)

BOTTLE POINTS

1.835"

1.052"
1.155"

EP 0 355 437 A1

% STANDARD DEVIATIONS
4 WAY PINCH-OFF VS. 2 WAY PINCH-OFF

FIG. 10

LEGEND
——— 4 WAY
– – – 2 WAY

FIG. 11

FIG. 12

## FIG. 13

## FIG. 14

## DOCUMENTS CONSIDERED TO BE RELEVANT

EP 89113649.1

| Category | Citation of document with indication, where appropriate, of relevant passages | Relevant to claim | CLASSIFICATION OF THE APPLICATION (Int. Cl.4) 5 |
|---|---|---|---|
| X | US - A - 3 478 388 (TURNER)<br>* Claims; fig. 8 * | 1-3,9 | B 29 C 49/50<br>B 29 C 49/04 |
| A | | 7,10-16,21 | |
| X | US - A - 3 430 290 (KINSLOW)<br>* Claims; fig. 1 * | 1-3,5,6 | |
| A | | 7,9,12-17,21 | |
| X | US - A - 3 896 200 (WILEY)<br>* Fig. 6,8 * | 1-5 | |
| A | | 6,12,16,21 | |
| A | US - A - 3 919 375 (KONTZ)<br>* Claims; fig. 6 * | 1-3,7,9,12,21 | TECHNICAL FIELDS SEARCHED (Int. Cl.5) 5 |
| A | US - A - 4 272 233 (COCHRAN)<br>* Column 4, lines 14-26 * | 1,8 | B 29 C |

The present search report has been drawn up for all claims

| Place of search | Date of completion of the search | Examiner |
|---|---|---|
| VIENNA | 10-11-1989 | REININGER |